(19) **Europäisches Patentamt**

**European Patent Office**

**Office européen des brevets**

(11) **EP 1 179 418 A2**

(12) **EUROPÄISCHE PATENTANMELDUNG**

(43) Veröffentlichungstag:
 **13.02.2002 Patentblatt 2002/07**

(51) Int Cl.7: **B32B 27/36**

(21) Anmeldenummer: **01117782.1**

(22) Anmeldetag: **02.08.2001**

(84) Benannte Vertragsstaaten:
 **AT BE CH CY DE DK ES FI FR GB GR IE IT LI LU
 MC NL PT SE TR**
 Benannte Erstreckungsstaaten:
 **AL LT LV MK RO SI**

(30) Priorität: **11.08.2000 DE 10039380**

(71) Anmelder: **Mitsubishi Polyester Film GmbH
 65203 Wiesbaden (DE)**

(72) Erfinder:
 • **Peiffer, Herbert, Prof. Dr.
 55126 Mainz (DE)**
 • **Hilkert, Gottfried, Dr.
 55291 Saulheim (DE)**
 • **Davis, Richard Lee, Dipl.-Ing.
 65187 Wiesbaden (DE)**

(74) Vertreter: **Schweitzer, Klaus, Dr. Dipl.-Chem. et al
 Patentanwaltskanzlei Zounek Industriepark
 Kalle-Albert Gebäude H391 Rheingaustrasse
 190
 65203 Wiesbaden (DE)**

(54) **Transparente Polyesterfolie mit hoher Sauerstoffbarriere, Verfahren zu ihrer Herstellung und ihre Verwendung**

(57) Die Erfindung betrifft eine transparente, biaxial orientierte Polyesterfolie mit einer Basisschicht B, die zu mindestens 80 Gew.-% aus einem thermoplastischen Polyester besteht und mindestens einer Deckschicht A. Die Deckschicht A besteht dabei aus einem Copolymeren oder Gemisch von Polymeren/Copolymeren, das Ethylen-2,6-naphthalat-Einheiten in einem Bereich von 90 bis 98 Gew.-% und bis zu 10 Gew.-% an Ethylen-terephthalat-Einheiten und/oder Einheiten aus cycloaliphatischen oder aromatischen Diolen und/oder Dicarbonsäuren enthält. Ihre Dicke beträgt mehr als 0,7 µm und macht weniger als 25 Gew.-% der Gesamtfolie aus und der $T_g2$-Wert der Polyesterfolie liegt über dem $T_g2$-Wert der Basisschicht, aber unterhalb des $T_g2$-Wertes des Polyesters für die Deckschicht. Die transparente Folie besitzt eine geringe Durchlässigkeit für Luftsauerstoff und zeigt eine sehr gute Haftkraft zwischen den jeweiligen Schichten. Sie eignet sich besonders für Verpackungszwecke, speziell zur Verpackung von Lebens- und Genußmitteln.

EP 1 179 418 A2

**Beschreibung**

Die Erfindung betrifft eine transparente, biaxial orientierte Polyesterfolie mit einer Basisschicht B, die zu mindestens 80 Gew.-% aus einem thermoplastischen Polyester besteht, und mindestens einer Deckschicht A. Die Erfindung betrifft weiterhin ein Verfahren zur Herstellung der Folie und ihre Verwendung.

Stand der Technik

In der EP-A-0 878 297 wird eine transparente biaxial orientierte Polyesterfolie mit einer Basisschicht B beschrieben, die zu mindestens 80 Gew.-% aus einem thermoplastischen Polyester besteht, und mindestens einer Deckschicht A, die aus einem Gemisch von Polymeren besteht, das mindestens 40 Gew.-% Ethylen-2,6-naphthalat-Einheiten und bis zu 40 Gew.-% Ethylen-terephthalat-Einheiten und/oder bis zu 60 % Einheiten aus cycloaliphatischen oder aromatischen Diolen und/oder Dicarbonsäuren enthält.

Enthält die Deckschicht A der Folie nach der EP-A-0 878 297 hohe Mengen an Ethylen-2,6-naphthalat-Einheiten, so neigt die Folie zum Delaminieren zwischen der Deckschicht A und der Basisschicht B. Enthält die Deckschicht A dagegen niedrige Konzentrationen an Ethylen-2,6-naphthalat-Einheiten, so muss die Dicke dieser Schicht angehoben werden, um die niedrige Sauerstoffpermeation von nicht mehr als 80 cm$^3$/(m$^2$ · bar · d) zu erreichen.

Bei einer Folie gemäß Beispiel 8 der EP-A-0 878 297 wird in der Deckschicht A reines Polyethylen-2,6-naphthalat (entspricht 100 Gew.-% Ethylen-2,6-naphthalat-Einheiten) verwendet. In diesem Fall besteht so gut wie keine Haftung zwischen der Deckschicht A und der Basisschicht B. Die Folie ist für den praktischen Gebrauch (z. B. als Verbundfolie) ungeeignet, weil sich der Verbund auf Grund der geringen Haftung zwischen der Deckschicht A und der Basisschicht B der Polyesterfolie schon bei geringer mechanischer Belastung auflöst.

Bei einer Folie gemäß Beispiel 11 der EP-A-0 878 297 enthält die Deckschicht A 60 Gew.-% Ethylen-2,6-naphthalat-Einheiten. Um die geforderte niedrige Sauerstoffpermeation von kleiner als 80 cm$^3$/(m$^2$ · bar · d) zu erreichen, muss die Dicke der Deckschicht A auf 3 μm angehoben werden, was wirtschaftlich ungünstig ist (teure Investition und hohe Materialkosten).

In der US-A 5,795,528 wird ein coextrudiertes Folienlaminat beschrieben, das alternierende Schichten aus PEN und PET aufweist. Das Laminat neigt wie die Folie nach der EP-A-0 878 297 zum Delaminieren zwischen den einzelnen Schichten aus PEN und PET. Zwischen diesen Schichten besteht so gut wie keine Haftung. Ein solches Laminat ist damit ebenfalls für die praktische Verwendung nicht geeignet.

Aufgabenstellung

Aufgabe der vorliegenden Erfindung war es deshalb, eine transparente, biaxial orientierte Polyesterfolie zur Verfügung zu stellen, die den Nachteil der Folien aus dem Stand der Technik nicht mehr aufweist und die sich insbesondere durch eine verbesserte Haftung zwischen den einzelnen Schichten auszeichnet. Die Folie soll einfach und preiswert herzustellen sein, gute Barriereeigenschaften aufweisen und keine Entsorgungsprobleme bereiten.

Lösung der Aufgabe

Gelöst wird diese Aufgabe durch eine transparente, biaxial orientierte Polyesterfolie mit einer Basisschicht B, die zu mindestens 80 Gew.-% aus einem thermoplastischen Polyester besteht, und mindestens einer Deckschicht A, deren kennzeichnende Merkmale darin zu sehen sind, dass

- die Deckschicht A aus einem Copolymeren oder einem Gemisch von Homo- und Copolymeren besteht, das Ethylen-2,6-naphthalat-Einheiten in einer Menge im Bereich von 90 bis 98 Gew.-% und bis zu 10 Gew.-% an Ethylen-terephthalat-Einheiten und/oder Einheiten aus cycloaliphatischen oder aromatischen Diolen und/oder Dicarbonsäuren enthält;

- die Dicke der Deckschicht A mehr als 0,7 μm beträgt und in Relation weniger als 25 Gew.-% der Gesamtfolie ausmacht; und

- der $T_g2$-Wert der Polyesterfolie über dem $T_g2$-Wert der Basisschicht, aber unterhalb des $T_g2$-Wertes der Deckschicht liegt.

Die erfindungsgemäße Folie weist eine niedrige Sauerstoffpermeation von weniger als 85 cm$^3$/(m$^2$ · bar · d) und eine Mindesthaftung zwischen den einzelnen Schichten A und B von größer/gleich 0,5 N/25 mm auf.

Die erfindungsgemäße Folie ist zumindest zweischichtig aufgebaut. Sie besteht dann aus einer Deckschicht A und einer Basisschicht B.

Bevorzugt ist eine Polyesterfolie, bei der das Copolymere oder das Gemisch von Homo- und Copolymeren der Deckschicht A Ethylen-2,6-naphthalat-Einheiten in einem Bereich von 91 bis 97 Gew -% und bis zu 9 Gew.-% an Ethylen-terephthalat-Einheiten und/oder Einheiten aus cycloaliphatischen oder aromatischen Diolen und/oder Dicarbonsäuren enthält. Davon ist wiederum eine solche Polyesterfolie besonders bevorzugt, bei der das Copolymere oder das Gemisch von Homo- und Copolymeren der Deckschicht A Ethylen-2,6-naphthalat-Einheiten in einem Bereich von 92 bis 96 Gew -% und bis zu 8 Gew.-% an Ethylen-terephthalat-Einheiten und/oder Einheiten aus cycloaliphatischen oder aromatischen Diolen und/oder Dicarbonsäuren enthält.

Bevorzugt ist daneben eine Polyesterfolie, deren Deckschicht A eine Dicke von mehr als 0,8 μm aufweist und in der Relation weniger als 22 Gew.-% der Gesamtfolie ausmacht und besonders bevorzugt ist eine Polyesterfolie, deren Deckschicht A eine Dicke von mehr als 0,9 μm beträgt und in der Relation weniger als 20 Gew.-% der Gesamtfolie ausmacht.

Geeignete aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen, cycloaliphatische, gegebenenfalls heteroatomhaltige Diole mit einem oder mehreren Ringen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)_2-$, $-O-$, $-S-$ oder $-SO_2-$ steht. Daneben sind auch Bisphenole der Formel $HO-C_6H_4-C_6H_4-OH$ gut geeignet.

Aromatische Dicarbonsäuren sind bevorzugt Benzoldicarbonsäuren, Naphthalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die $(C_3-C_{19})$Alkandisäuren besonders geeignet, wobei der Alkanteil geradkettig oder verzweigt sein kann

Die Basisschicht der Folie besteht bevorzugt zu mindestens 90 Gew.-% aus einem thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethyl-cyclohexan und Terephthalsäure (= Poly(1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 mol-%, bevorzugt mindestens 95 mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen Diolen bzw. Dicarbonsäuren. Geeignete Diol-Comonomere sind beispielsweise Diethylenglykol, Triethylenglykol, aliphatische Glykole der allgemeinen Formel $HO-(CH_2)_n-OH$, wobei n eine ganze Zahl von 3 bis 6 darstellt, verzweigte aliphatische Glykole mit bis zu 6 Kohlenstoff-Atomen, aromatische Diole der allgemeinen Formel $HO-C_6H_4-X-C_6H_4-OH$, wobei X für $-H_2-$, $-C(CH_3)_2-$, $-C(CF_3)_2-$, $-O-$, $-S-$ oder $-SO_2-$ steht, oder Bisphenole der allgemeinen Formel $HO-C_6H_4-C_6H_4-OH$ eingesetzt werden.

Die Dicarbonsäure-Comonomereinheiten leiten sich bevorzugt ab von Benzoldicarbonsäuren, Naphthalindicarbonsäuren, Biphenyl-x,x'-dicarbonsäuren (insbesondere Biphenyl-4,4'-dicarbonsäure), Cyclohexandicarbonsäuren (insbesondere Cyclohexan-1,4-dicarbonsäure), Diphenylacetylen-x,x'-dicarbonsäuren (insbesondere Diphenylacetylen-4,4'-dicarbonsäure), Stilben-x,x'-dicarbonsäure oder $(C_1-C_{16})$Alkandicarbonsäuren, wobei der Alkanteil geradkettig oder verzweigt sein kann.

Die Herstellung der Polyester kann nach dem Umesterungsverfahren erfolgen. Dabei geht man von Dicarbonsäureestern und Diolen aus, die mit den üblichen Umesterungskatalysatoren, wie Zink-, Calcium-, Lithium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Die Copolymeren für die Deckschicht A können auf drei verschiedene Weisen hergestellt werden:

a) Bei der gemeinsamen Polykondensation werden Terephthalsäure und Naphthalin-2,6-dicarbonsäure gemeinsam mit Ethylenglykol in einem Reaktionskessel vorgelegt und unter Verwendung der üblichen Katalysatoren und Stabilisatoren zu einem Polyester polykondensiert. Die Terephthalat- und Naphthalat-Einheiten sind dann in dem Polyester statistisch verteilt.

b) Polyethylenterephthalat (PET) und Polyethylen-2,6-naphthalat (PEN) werden im gewünschten Verhältnis gemeinsam aufgeschmolzen und gemischt. Dies kann entweder in einem Reaktionskessel oder vorzugsweise in einem Schmelzkneter (Zweischneckenkneter) oder einem Extruder erfolgen. Sofort nach dem Aufschmelzen beginnen Umesterungsreaktionen zwischen den Polyestern. Zunächst erhält man Blockcopolymere, aber mit zunehmender Reaktionszeit - abhängig von der Temperatur und Mischwirkung des Rührelements - werden die Blöcke kleiner, und bei langer Reaktionszeit erhält man ein statistisches Copolymer. Allerdings ist es nicht nötig und auch nicht unbedingt vorteilhaft zu warten, bis eine statistische Verteilung erreicht ist, denn die gewünschten Eigenschaften werden auch mit einem Blockcopolymer erhalten. Anschließend wird das erhaltene Copolymer aus einer Düse herausgepresst und granuliert.

c) Polyethylenterephthalat (PET) und Polyethylen-2,6-naphthalat (PEN) werden als Granulat im gewünschten Verhältnis gemischt und die Mischung dem Extruder für die Deckschicht A zugeführt. Hier findet die Umesterung zum Copolymer direkt während der Herstellung der Folie statt. Dieses Verfahren hat den Vorteil, dass es sehr wirtschaftlich ist. In der Regel werden mit diesem Verfahren Blockcopolymere erhalten, wobei die Blocklänge von der Extrusionstemperatur, der Mischwirkung des Extruders und der Verweilzeit in der Schmelze abhängt.

In einer bevorzugten Ausführungsform der Erfindung sind 0,1 bis 20 Gew.-% der Polymere der Basisschicht B identisch mit denen der Deckschicht A. Diese werden der Basisschicht B entweder direkt bei der Extrusion beigemischt oder sind automatisch in der Folie durch Regeneratzugabe enthalten. Der Anteil dieser Copolymere in der Basisschicht ist so gewählt, dass die Basisschicht kristallinen Charakter aufweist.

In einer weiteren vorteilhaften Ausführungsform umfasst die Folie auf der der Deckschicht A abgewandten Seite eine weitere Deckschicht C aus Polyethylenterephthalat, die Pigmente enthält.

Die erfindungsgemäße Folie zeigt eine hohe Sauerstoffbarriere und die gewünschte gute Haftung zwischen den einzelnen Schichten der erfindungsgemäßen Folie.

Werden für die Deckschicht A Polymere/Copolymere verwendet, die weniger als 90 Gew.-% Ethylen-2,6-naphthalat-Einheiten und mehr als 10 Gew.-% Ethylen-terephthalat-Einheiten enthalten, bei einer Dicke der Deckschicht A von weniger als 0,7 μm, dann ist die Folie zwar weniger durchlässig für Sauerstoff als eine Standardpolyesterfolie (die zu 100 Gew.-% aus Polyethylenterephthalat besteht), die Durchlässigkeit ist jedoch im Sinne der vorliegenden Erfindung noch zu hoch.

Werden für die Deckschicht A Polymere/Copolymere verwendet, die mehr als 98 Gew.-% Ethylen-2,6-naphthalat-Einheiten enthalten (z.B. reines Polyethylen-2,6-naphthalat), dann ist die Adhäsion zwischen der Deckschicht A und der Basisschicht B nicht mehr ausreichend. Die Folie neigt bei mechanischer Beanspruchung zum Delaminieren, was unerwünscht ist und zu einer nicht verwendbaren Folie führt.

Weiterhin zeichnet sich die erfindungsgemäße Folie dadurch aus, dass die Glasübergangstemperatur $T_g$ des Copolymers bzw. der Mischung aus Homo- und Copolymeren der Deckschicht A im Vergleich zum Stand der Technik höher liegt als die Glasübergangstemperatur $T_g$ der Polymeren für die Basisschicht B. Die Glasübergangstemperatur $T_g$ der eingesetzten Copolymeren für die Deckschicht A liegt vorzugsweise im Bereich von 90 bis 120 °C. Bei der Bestimmung der Glasübergangstemperaturen $T_g$ mittels Differential Scanning Calorimetry (DSC) können die Übergänge der einzelnen Schichten bei einer Mehrschichtfolie nicht unterschieden werden.

Glasübergänge, die beim ersten Aufheizvorgang an biaxial orientierten, wärmefixierten Folien bestimmt werden (im folgenden $T_g1$ genannt), sind wegen der Kristallinität sowie der molekularen Spannungen im amorphen Anteil der Proben in ihrem Ausmaß relativ gering ausgebildet, über einen breiten Temperaturbereich verteilt und zu höheren Temperaturen verschoben. Vor allem auf Grund von Orientierungseffekten eignen sie sich nicht zur Charakterisierung eines Polymers als solchem. Die Auflösung von DSC-Messgeräten reicht oft nicht aus, um die wegen der Orientierung und Kristallinität kleinen und "verschmierten" Glasstufen im ersten Aufheizvorgang ($T_g1$) der einzelnen Schichten der erfindungsgemäßen Folie überhaupt zu erfassen.

Wenn die Proben aber aufgeschmolzen und dann schnell wieder unter ihre Glasübergangstemperatur $T_g$ abgekühlt (abgeschreckt) werden, dann werden die Orientierungseffekte eliminiert. Beim erneuten Aufheizen werden dann Glasübergänge (hier als $T_g2$ bezeichnet) gemessen, die eine höhere Intensität haben und deren Lage auf der Temperaturskala charakteristisch ist für die jeweiligen Polymeren als solche. Die Glasübergänge der Polyester der einzelnen Schichten lassen sich allerdings auch so nicht unterscheiden, weil sich die Schichten beim Aufschmelzen vermischen und die darin enthaltenen Polyester untereinander Umesterungsreaktionen eingehen. Es ist jedoch völlig ausreichend, die Temperatur $T_g2$ der gesamten coextrudierten Folien mit der Temperatur $T_g2$ des für die Basisschicht B verwendeten Polyesters zu vergleichen. In bekannten Folien liegt der $T_g2$-Wert des Polyesters für die Basisschicht höher als der $T_g2$-Wert der coextrudierten Folie, während der $T_g2$-Wert des Polyesters für die Deckschicht niedriger liegt als der $T_g2$-Wert des Polyesters für die Basisschicht und auch niedriger als der $T_g2$-Wert der coextrudierten Folie. In der erfindungsgemäßen Folie ist dies gerade umgekehrt. Hier liegt der $T_g2$-Wert der coextrudierten Folie höher als der $T_g2$-Wert des Polyesters für die Basisschicht B, aber unterhalb des $T_g2$-Wertes des Polyesters für die Deckschicht A.

Die Basisschicht B und die Deckschicht(en) können zusätzlich übliche Additive, wie Stabilisatoren und Antiblockmittel, enthalten. Sie werden zweckmäßig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt. Typische Antiblockmittel (in diesem Zusammenhang auch als Pigmente bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Ruß, Titandioxid, Kaolin oder vernetzte Polystyrol- oder Acrylat-Partikel.

Als Additive können auch Mischungen von zwei oder mehr verschiedenen Antiblockmitteln oder Mischungen von Antiblockmitteln gleicher Zusammensetzung, aber unterschiedlicher Partikelgröße gewählt werden. Die Partikeln können den einzelnen Schichten in den üblichen Konzentrationen, z.B. als glykolische Dispersion während der Polykondensation oder über Masterbatche bei der Extrusion zugegeben werden. Als vorteilhaft haben sich Pigmentkonzentrationen von 0,0001 bis 5 Gew.-% erwiesen. Eine detaillierte Beschreibung der Antiblockmittel findet sich beispielsweise in der EP-A 0 602 964.

Zur Einstellung weiterer gewünschter Eigenschaften kann die Folie corona- bzw. flammvorbehandelt und/oder beschichtet sein. Typische Beschichtungen sind haftvermittelnde, antistatisch, schlupfverbessernd oder dehäsiv wirkende Schichten. Es bietet sich an, diese zusätzlichen Schichten über in-line coating mittels wässriger Dispersionen vor der Querverstreckung auf die Folie aufzubringen. Die Folie eignet sich daneben insbesondere für eine Metallisierung oder für eine Beschichtung mit keramischen Substanzen ($SiO_x$, $Al_2O_3$). Zu besonders guten Werten für die Sauerstoffbarriere gelangt man, wenn die Deckschicht A metallisiert oder keramisch beschichtet wird.

Die erfindungsgemäße Polyesterfolie kann vorzugsweise noch eine zweite Deckschicht C enthalten. Aufbau, Dicke und chemische Zusammensetzung der zweiten Deckschicht C können unabhängig von der bereits vorhandenen Deckschicht A gewählt werden, wobei die zweite Deckschicht C ebenfalls die bereits genannten Polymeren oder Polymermischungen enthalten kann, welche aber nicht notwendig mit den Polymeren für die erste Deckschicht A identisch sein müssen. Die zweite Deckschicht C kann auch andere gängige Deckschichtpolymeren enthalten.

Zwischen der Basisschicht B und der Deckschicht A kann sich auch eine Zwischenschicht Z befinden. Die Dicke der Zwischenschicht Z ist im allgemeinen größer als 0,1 μm und liegt vorzugsweise im Bereich von 0,2 bis 20 μm, insbesondere 0,3 bis 10 μm.

Die Dicke der Deckschicht C ist im allgemeinen größer als 0,1 μm und liegt vorzugsweise im Bereich von 0,2 bis 5 μm, insbesondere 0,2 bis 4 μm, wobei die Deckschichten gleich oder verschieden dick sein können.

Die Gesamtdicke der erfindungsgemäßen Polyesterfolie kann innerhalb weiter Grenzen variieren und richtet sich nach dem beabsichtigten Verwendungszweck. Sie beträgt 6 bis 100 μm, vorzugsweise 8 bis 50 μm, besonders bevorzugt 10 bis 30 μm, wobei die Basisschicht B einen Anteil von vorzugsweise 40 bis 95 % an der Gesamtdicke hat.

Gegenstand der vorliegenden Erfindung ist auch ein Verfahren zur Herstellung dieser Folie. Es umfasst

a) Herstellen einer mehrschichtigen Folie aus einer Basisschicht B und Deckschicht(en) A und ggf. C durch Coextrusion;
b) biaxiales Strecken der Folie und
c) Thermofixieren der gestreckten Folie.

Zur Herstellung der Deckschicht A werden zweckmäßig Granulate aus Polyethylenterephthalat und Polyethylen-2,6-naphthalat im gewünschten Mischungsverhältnis direkt dem Extruder zugeführt. Die beiden Materialien lassen sich bei etwa 300 °C aufschmelzen und extrudieren. Unter diesen Bedingungen können im Extruder Umesterungsreaktionen ablaufen, bei denen sich Copolymere aus den jeweiligen Homopolymeren bilden.

Die Polymere für die Basisschicht B werden zweckmäßig über einen weiteren Extruder zugeführt. Etwa vorhandene Fremdkörper oder Verunreinigungen lassen sich aus der Polymerschmelze vor der Extrusion abfiltrieren. Die Schmelzen werden dann in einer Mehrschichtdüse zu flachen Schmelzefilmen ausgeformt und übereinander geschichtet. Anschließend wird der Mehrschichtfilm mit Hilfe einer Kühlwalze und gegebenenfalls weiteren Walzen abgezogen und verfestigt.

Die biaxiale Streckung wird im allgemeinen sequentiell durchgeführt. Dabei wird vorzugsweise erst in Längsrichtung (d.h. in Maschinenrichtung) und anschließend in Querrichtung (d.h. senkrecht zur Maschinenrichtung) gestreckt. Dies führt zu einer Orientierung der Molekülketten innerhalb des Polyesters. Das Strecken in Längsrichtung lässt sich mit Hilfe zweier entsprechend dem angestrebten Streckverhältnis verschieden schnell rotierender Walzen durchführen. Zum Querstrecken benutzt man allgemein einen entsprechenden Kluppenrahmen.

Die Temperatur, bei der die Streckung durchgeführt wird, kann in einem relativ großen Bereich variieren und richtet sich nach den gewünschten Eigenschaften der Folie. Im allgemeinen wird die Streckung in Längsrichtung bei 80 bis 130 °C und die Querstreckung bei 90 bis 150 °C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1.

Bei der nachfolgenden Thermofixierung wird die Folie über eine Zeitdauer von etwa 0,1 bis 10 s bei einer Temperatur von 150 bis 250 °C gehalten. Anschließend wird die Folie in üblicher Weise aufgewickelt.

Von großem Vorteil bei diesem Verfahren ist, dass dem Extruder Granulate zu gegeben werden können, die die Maschine nicht verkleben.

Ein weiterer Vorteil der Erfindung besteht darin, dass die Herstellungskosten der erfindungsgemäßen Folie nur unwesentlich über denen einer Folie aus Standard-polyesterrohstoffen liegen. Die sonstigen verarbeitungs- und gebrauchsrelevanten Eigenschaften der erfindungsgemäßen Folie bleiben im wesentlichen unverändert oder sind sogar verbessert. Daneben ist bei der Herstellung der Folie gewährleistet, dass Verschnittmaterial, das bei der Folienherstellung im Betrieb immanent anfällt, als Regenerat in einer Menge von bis zu 60 Gew.-%, bevorzugt 10 bis 50 Gew.-%, jeweils bezogen auf das Gesamtgewicht der Folie, wieder für die Folienherstellung verwendet werden kann, ohne dass dabei die physikalischen Eigenschaften der Folie nennenswert negativ beeinflusst werden.

Die erfindungsgemäße Folie eignet sich hervorragend zum Verpacken von Nahrungs- und Genußmitteln. Die erfindungsgemäße Folie zeichnet sich durch hervorragende Barriereeigenschaften, insbesondere gegenüber Sauerstoff aus. Bei der Verarbeitung der Folie z.B. zu Folienlaminaten ist gewährleistet, dass die einzelnen Schichten des Laminates zusammen haften bleiben und nicht delaminieren.

Außerdem konnte der Glanz und die Trübung der Folie gegenüber Folien nach dem Stand der Technik verbessert werden. Bei der Herstellung der Folie ist gewährleistet, dass das Regenerat in einer Menge von bis zu 60 Gew.-%, bezogen auf das Gesamtgewicht der Folie, wieder der Extrusion zugeführt werden kann, ohne dass dabei die physikalischen Eigenschaften der Folie nennenswert negativ beeinflusst werden.

Die Folie eignet sich auf Grund ihrer hervorragenden Handlings und auf Grund ihrer sehr guten Verarbeitungseigenschaften insbesondere für die Verarbeitung auf schnelllaufenden Maschinen.

Die nachstehende Tabelle (Tabelle 1) fasst die wichtigsten erfindungsgemäßen Folieneigenschaften noch einmal zusammen und auf einen Blick.

Tabelle 1

|  | Erfindungsgemäßer Bereich | bevorzugt | besonders bevorzugt | Einheit | Messmethode |
|---|---|---|---|---|---|

Deckschicht A

|  | Erfindungsgemäßer Bereich | bevorzugt | besonders bevorzugt | Einheit | Messmethode |
|---|---|---|---|---|---|
| Ethylen-2,6-naphthalat-Einheiten | 90 bis 98 | 91 bis 97 | 92 bis 96 | Gew.-% |  |
| Ethylen-terephthalat-Einheiten | < 10 | < 9 | < 8 | Gew.-% |  |
| Dicke | 0,7 µm bis 25 % der Gesamtdicke | 0,8 µm bis 22 % der Gesamtdicke | 0,9 µm bis 20 % der Gesamtdicke | µm/Gew.-% |  |

Folieneigenschaften

|  | Erfindungsgemäßer Bereich | bevorzugt | besonders bevorzugt | Einheit | Messmethode |
|---|---|---|---|---|---|
| Sauerstoffpermeation | < 85 | < 80 | < 75 | $cm^3/(m^2 \cdot bar \cdot d)$ | DIN 53 380, Teil 3 |
| Haftung zwischen den Schichten | > 0,5 | > 0,7 | >1,0 | N/25 mm | intern |

EP 1 179 418 A2

**Messmethoden**

Zur Charakterisierung der Rohstoffe und der Folien wurden die folgenden Methoden benutzt:

*Sauerstoffdurchlässigkeit*

Die Messung der Sauerstoffbarriere erfolgte mit einem OX-TRAN 2/20 von Mocon Modern Controls (USA) entsprechend DIN 53 380, Teil 3.

*SV-Wert (standard viscosity)*

Die Standardviskosität SV (DCE) wird, angelehnt an DIN 53726, bei 25 °C in Dichloressigsäure gemessen. Die intrinsische Viskosität (IV) berechnet sich wie folgt aus der Standardviskosität

$$IV = [\eta] = 6{,}907 \cdot 10^{-4} \, SV \, (DCE) + 0{,}063096 \, [dl/g].$$

*Reibung*

Die Reibung wurde nach DIN 53 375 bestimmt. Die Gleitreibungszahl wurde 14 Tage nach der Produktion gemessen.

*Oberflächenspannung*

Die Oberflächenspannung wurde mit der sogenannten Tintenmethode (DIN 53 364) bestimmt.

*Trübung*

Die Trübung der Folie wurde nach ASTM-D 1003-52 gemessen. Die Trübungsmessung nach Hölz wurde in Anlehnung an ASTM-D 1003-52 bestimmt, wobei jedoch zur Ausnutzung des optimalen Messbereichs an vier übereinander liegenden Folienlagen gemessen und anstelle einer 4°-Lochblende eine 1°-Spaltblende eingesetzt wurde.

*Glanz*

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° oder 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

*Glasübergangstemperaturen $T_g$*

Die Glasübergangstemperaturen $T_g1$ und $T_g2$ wurden anhand von Folienproben mit Hilfe der DSC (Differential Scanning Calorimetry) bestimmt. Verwendet wurde ein DSC 1090 der Fa. DuPont. Die Aufheizgeschwindigkeit betrug 20 K/min und die Einwaage ca. 12 mg. Im ersten Aufheizvorgang wurde der Glasübergang $T_g1$ ermittelt. Die Proben zeigten vielfach eine Enthalpierelaxation (ein Peak) zu Beginn des stufenförmigen Glasübergangs. Als $T_g1$ wurde die Temperatur genommen, bei der die stufenförmige Veränderung der Wärmekapazität - unabhängig von der peakförmigen Enthalpierelaxation - ihre halbe Höhe im ersten Aufheizvorgang erreichte. In allen Fällen wurde nur eine einzige Glasübergangsstufe im Thermogramm beim ersten Aufheizen beobachtet. Möglicherweise überdeckten die peakförmigen Enthalpierelaxationen die Feinstruktur der Stufe oder die Auflösung des Gerätes war für eine Auftrennung der kleinen, "verschmierten" Übergänge von orientierten, kristallinen Proben nicht ausreichend. Um die thermische Vorgeschichte zu eliminieren, wurden die Proben nach dem Aufheizen 5 Minuten bei 300° C gehalten und dann anschließend mit flüssigem Stickstoff abgeschreckt. Aus dem Thermogramm für das zweite Aufheizen wurde die Temperatur für den Glasübergang $T_g2$ als die Temperatur bei halber Stufenhöhe entnommen.

*Haffung zwischen den Schichten*

Das Folienmuster (300 mm längs * 180 mm quer) gemäß der vorliegenden Erfindung wird vor dem Verkleben auf einen glatten Karton (200 mm längs*180 mm quer; ca. 400 g/m$^2$, gebleicht, Außenlagen gestrichen) gelegt, die überstehenden Folienenden sind auf die Rückseite umzuschlagen und mit Klebeband zu fixieren.

Die Verklebung der Folie gemäß der vorliegenden Erfindung mit einer Standard-polyesterfolie von 12 μm Dicke (z.B. Melinex 800) erfolgt mit einem Rakelgerät und Rakelstab Nr. 3 der Fa. Erichsen, wobei ca. 1,5 ml Klebstoff (Novacote NC 275+CA 12; Mischverhältnis: 4/1+ 7 Teile Ethylacetat) auf die Deckschicht A der Folie gemäß der vorliegenden Erfindung aufgetragen wird. Nach dem Auslüften des Lösemittels wird die Standardpolyesterfolie mit einer Metallrolle (Breite 200 mm, Durchmesser 90 mm, Masse 10 kg, nach DIN EN 20 535) auf die Deckschicht A der Folie gemäß der vorliegenden Erfindung aufkaschiert. Die Parameter der Kaschierung sind:

| | |
|---|---|
| Klebstoffmenge | 5 +/- 1 g/m$^2$ |
| Lüften nach Auftrag des Klebers | 4 min +/- 15 s |
| Rakelstärke (Erichsen) | 3 |
| Geschwindigkeitsstufe des Rakels | ca. 133 mm/s |
| Aushärtzeit des Verbundes | 2 h bei 70 °C in einem Umluftofen |

Mit einem 25 +/- 1 mm Streifenschneider werden ca. 100 mm lange Proben entnommen. Hierbei sind ca. 50 mm Verbund und 50 mm unverklebte Einzellagen zum Fixieren/Einspannen des Prüfkörpers notwendig. Die Prüflinge sind mittels doppelseitigem Klebeband mit der Rückseite der Folie gemäß der vorliegenden Erfindung (Basisschicht B oder Deckschicht C) vollflächig auf einem Trägerblech zu fixieren. Die Platte mit dem aufgeklebten Verbund ist in die untere Spannbacke derZugprüfmaschine einzuspannen. Der Klemmabstand beträgt 100 mm. Das nicht kaschierte Ende der Standard-Polyesterfolie ist so in die obere Spannbacke der 180 ° ergibt. Angegeben wird die mittlere Schälkraft in N/25 mm gerundet auf eine Stelle nach dem Komma.

| | |
|---|---|
| Probenbreite | 25 mm |
| Vorkraft | 0,1 N |
| Messlänge | 25 mm |
| Abzugsgeschwindigkeit bis Vorkraft | 25 mm/min |
| Vorweg | 5 mm |
| Prüfweg | 40 mm |
| Empfindlichkeit | 0,01 N |
| Abzugsgeschwindigkeit | 100 mm/min |

Das Messergebnis für die Schälkraft ist gleichzusetzen mit der minimalen Haftkraft zwischen den Schichten, da die Haftkraft zwischen dem Kleber und der Standardfolie deutlich größer ist. Eine Schichtablösung der Deckschicht A von der Basisschicht B der Folie gemäß der vorliegenden Erfindung kann beispielsweise mittels UV-Lampe nachgewiesen werden. Befindet sich auf dem Kleber Copolymeres aus PEN und PET, so leuchtet bei Bestrahlung dieser Schicht mittels UV Lampe das UV-Licht bläulich auf.

Beispiele

Die folgenden Beispiele illustrieren die Erfindung. Die verwendeten Produkte (Warenzeichen und Herstellerfirma) sind jeweils nur einmal angegeben und beziehen sich dann auch auf die folgenden Beispiele.

Beispiel 1

Chips aus Polyethylenterephthalat und Polyethylen-2,6-naphthalat wurden in einem Mischungsverhältnis von 3 : 97 bei einer Temperatur von 160 °C auf eine Restfeuchte von weniger als 100 ppm getrocknet und direkt dem Extruder für die Deckschicht A zugeführt. Dort wurden die beiden Materialien bei einer Temperatur von etwa 300 °C extrudiert. Die Schmelze wurde filtriert, in einer Mehrschichtdüse zu einem Flachfilm ausgeformt und als Deckschicht A der Basisschicht B überlagert. Der Mehrschichtfilm wurde über die Düsenlippe ausgestoßen und auf einer Kühlwalze verfestigt. Die Verweilzeit der beiden Polymeren in der Extrusion betrug ca. 5 min. Es entstand ein Copolymer in der Extrusion bei den angegebenen Bedingungen.

Chips aus Polyethylenterephthalat wurden bei einer Temperatur von 160 °C auf eine Restfeuchte von weniger als 100 ppm getrocknet und dem Extruder für die Basisschicht B zugeführt. Daneben wurden Chips aus Polyethylenterephthalat und Antiblockmittel ebenfalls bei 160 °C auf eine Restfeuchte von 100 ppm getrocknet und dem Extruder für die Deckschicht C zugeführt. Die Bedingungen im Extruder für die Deckschicht C waren dieselben wie die für den Coextruder A.

Durch Coextrusion und anschließende stufenweise Orientierung in Längs- und Querrichtung wurde eine transparente dreischichtige Folie ABC mit einer Gesamtdicke von 12 µm hergestellt. Die Deckschicht A hatte eine Dicke von 1,1 µm und die Deckschicht C eine Dicke von 1,0 µm.

Deckschicht A:

| 97 Gew.-% | Polyethylen-2,6-naphthalat (® Polyclear P 100 Prepolymer von KOSA/Offenbach) mit einem SV-Wert von 600, |
|---|---|
| 3 Gew.-% | Polyethylenterephthalat mit einem SV-Wert von 800. |

Basisschicht B:

| 100 Gew.-% | Polyethylenterephthalat (4020 von KOSA/Offenbach) mit einem SV-Wert von 800 und |
|---|---|

Deckschicht C:

| 80 Gew.-% | Polyethylenterephthalat mit einem SV-Wert von 800 und |
|---|---|
| 20 Gew.-% | Masterbatch aus 99,0 Gew.-% Polyethylenterephthalat und 1,0 Gew.-% Kieselsäurepartikel, die zu 50 % eine mittlere Teilchengröße von 2,5 µm und zu 50 % eine mittlere Teilchengröße von 0,4 µm hatten. |

Die einzelnen Verfahrensschritte waren:

| Extrusion: | Temperaturen | A-Schicht: | 300 °C |
|---|---|---|---|
| | | B-Schicht: | 300 °C |
| | | C-Schicht: | 300 °C |
| | Temperatur der Abzugswalze | | 30 °C |
| Längsstreckung: | Temperatur: | | 122 °C |
| | Längsstreckverhältnis: | | 4,5 : 1 |
| Querstreckung: | Temperatur: | | 125 °C |
| | Querstreckverhältnis : | | 4,0 : 1 |
| Fixierung: | Temperatur: | | 230 °C |

Die Folie hatte die geforderte Sauerstoffbarriere und die geforderte Haftung der Schichten untereinander.

Beispiel 2

Wie in Beispiel 1 wurde durch Coextrusion eine dreischichtige Folie ABC mit einer Gesamtdicke von 12 µm hergestellt. Die Deckschicht A hatte eine Dicke von 1,3 µm und die Deckschicht C eine Dicke von 1,0 µm.

Deckschicht A:

| 95 Gew.-% | Polyethylen-2,6-naphthalat (® Polyclear P 100 Prepolymer von KOSA/Offenbach) mit einem SV-Wert von 600, |
|---|---|
| 5 Gew.-% | Polyethylenterephthalat mit einem SV-Wert von 800. |

Basisschicht B:

| 100 Gew.-% | Polyethylenterephthalat (4020 von KOSA/Offenbach) mit einem SV-Wert von 800 und |
|---|---|

Deckschicht C:

| 80 Gew.-% | Polyethylenterephthalat mit einem SV-Wert von 800 und |
|---|---|
| 20 Gew.-% | Masterbatch aus 99,0 Gew.-% Polyethylenterephthalat und 1,0 Gew.-% Kieselsäurepartikel, die zu 50 % eine mittlere Teilchengröße von 2,5 μm und zu 50 % eine mittlere Teilchengröße von 0,4 μm hatten. |

Die Verfahrensbedingungen waren für alle Schichten wie im Beispiel 1.

Vergleichsbeispiel V1

Es wurde eine Folie entsprechend Beispiel 8 der EP-A-0 878 297 hergestellt. Die Folie hatte die geforderte Sauerstoffbarriere, die Haftung zwischen den Schichten A und B war jedoch äußerst gering.

Vergleichsbeispiel V2

Es wurde eine Folie entsprechend Beispiel 1 der US-A 5,795,528 hergestellt. Im Vergleich zum Beispiel aus der US-A 5,795,528 wurden jedoch nur 2 Schichten aus PEN und PET gewählt. Die Folie hatte die geforderte Sauerstoffbarriere, die Haftung zwischen den Schichten A und B war jedoch äußerst gering.

Die Eigenschaften der gemäß den Beispielen 1 und 2 und den Vergleichsbeispielen V1 und V2 hergestellten Folien sind in Tabelle 3 zusammengestellt.

Tabelle 2

| Beispiele | 1 | 2 | V1 | V2 |
|---|---|---|---|---|
| Ethylen-2,6-naphthalat-Einheiten in der Deckschicht A (in Gew.-%) | 97 | 95 | 100 | 100 |
| Ethylenterephthalat-Einheiten in der Deckschicht A (in Gew.-%) | 3 | 5 | 0 | 0 |

EP 1 179 418 A2

Tabelle 3

| Bei-spiel Nr. | Folien-dicke (µm) | Schichtdicken A/B/C (µm) | Folien-aufbau | Sauerstoff-Permeation ($cm^3/m^2$ bar d) | Haftung zwischen den Schichten N/25 mm | Glanz (20° Meßwinkel) A-Seite | Glanz (20° Meßwinkel) C-Seite | Trübung |
|---|---|---|---|---|---|---|---|---|
| 1 | 12 | 1,1/9,9/1,0 | ABC | 78 | 0,6 | 205 | 175 | 1,8 |
| 2 | 12 | 1,3/9,7/1,0 | ABC | 79 | 1,4 | 199 | 180 | 1,6 |
| V1 | 12 | 3,0/7,5/1,5 | ABC | 50 | 0,1 | 203 | 175 | 1,8 |
| V2 | 12 | 6,0/6,0 | AB | 45 | 0,1 | 200 | 195 | 2,0 |

12

**Patentansprüche**

1. Transparente, biaxial orientierte Polyesterfolie mit einer Basisschicht B, die zu mindestens 80 Gew.-% aus einem thermoplastischen Polyester besteht und mindestens einer Deckschicht A, **dadurch gekennzeichnet ist, dass**

   - die Deckschicht A ein Copolymer oder ein Gemisch von Homo- und Copolymer enthält, das Ethylen-2,6-naphthalat-Einheiten in einem Bereich von 90 bis 98 Gew.-% und bis zu 10 Gew.-% an Ethylen-terephthalat-Einheiten und/oder Einheiten aus cycloaliphatischen oder aromatischen Diolen und/oder Dicarbonsäuren enthält;
   - die Dicke der Deckschicht A mehr als 0,7 μm beträgt und weniger als 25 Gew.-% der Gesamtfolie ausmacht und
   - der $T_g2$-Wert der Polyesterfolie über dem $T_g2$-Wert des Polyesters für die Basisschicht B, aber unterhalb des $T_g2$-Wertes des Polyesters für die Deckschicht A liegt.

2. Transparente Folie gemäß Anspruch 1, **dadurch gekennzeichnet, dass** das Copolymere oder das Gemisch von Homo- und Copolymeren in der Deckschicht A bevorzugt Ethylen-2,6-naphthalat-Einheiten in einem Bereich von 91 bis 97 Gew -% enthält, besonders bevorzugt in einem Bereich von 92 bis 96 Gew -%.

3. Transparente Folie gemäß Anspruch 1 oder 2, **dadurch gekennzeichnet , dass** die Deckschicht A eine Dicke von mehr als 0,8 μm besitzt und weniger als 22 Gew.-% der Gesamtfolie ausmacht, bevorzugt eine Dicke von mehr als 0,9 μm besitzt und weniger als 20 Gew.-% der Gesamtfolie ausmacht.

4. Transparente Folie gemäß einem oder mehreren der Ansprüche 1 bis 3, **dadurch gekennzeichnet, dass** sie eine Sauerstoffpermeation von weniger als 85 $cm^3/(m^2 \cdot bar \cdot d)$, bevorzugt von weniger als 80 $cm^3/(m^2 \cdot bar \cdot d)$, besonders bevorzugt weniger als 75 $cm^3/(m^2 \cdot bar \cdot d)$, aufweist.

5. Transparente Folie gemäß einem oder mehreren der Ansprüche 1 bis 4, **dadurch gekennzeichnet, dass** die Haftung zwischen den einzelnen Schichten größer als 0,5 N/25 mm, bevorzugt größer als 0,7 N/25 mm und besonders bevorzugt größer als 1,0 N/25 mm beträgt.

6. Transparente Folie gemäß einem oder mehreren der Ansprüche 1 bis 5, **dadurch gekennzeichnet, dass** sie zusätzlich eine Zwischenschicht Z mit einer Dicke von größer als 0,1 μm, vorzugsweise von 0,2 bis 20,0 μm, insbesondere von 0,3 bis 10,0 μm, enthält.

7. Transparente Folie gemäß einem oder mehreren der Ansprüche 1 bis 5, **dadurch gekennzeichnet, dass** sie dreischichtig aufgebaut ist und eine Basisschicht B, eine Deckschicht A und eine Deckschicht C enthält.

8. Transparente Folie gemäß einem oder mehreren der Ansprüche 1 bis 5, **dadurch gekennzeichnet, dass** sie vierschichtig aufgebaut ist und eine Deckschicht C, eine darauf angeordnete Basisschicht B, eine darauf angeordnete Zwischenschicht Z und eine darauf angeordnete Deckschicht A enthält.

9. Transparente Folie gemäß einem oder mehreren der Ansprüche 1 bis 8, **dadurch gekennzeichnet, dass** mindestens eine der Deckschichten pigmentiert ist.

10. Transparente Folie gemäß einem oder mehreren der Ansprüche 1 bis 9, **dadurch gekennzeichnet, dass** sie auf mindestens einer Seite mit einer elektrischen Coronaentladung behandelt ist.

11. Transparente Folie gemäß einem oder mehreren der Ansprüche 1 bis 10, **dadurch gekennzeichnet, dass** sie auf mindestens einer Seite in-line beschichtet ist.

12. Transparente Folie gemäß einem oder mehreren der Ansprüche 1 bis 11, **dadurch gekennzeichnet, dass** sie auf der Deckschicht A metallisiert oder keramisch beschichtet ist.

13. Verfahren zur Herstellung der Folie nach einem oder mehreren der Ansprüche 1 bis 12, umfassend die Schritte

    - Herstellen einer Folie aus Basis- und Deckschicht(en) durch Coextrusion,
    - biaxiales Strecken der Folie und
    - Thermofixieren der gestreckten Folie,

    **dadurch gekennzeichnet, dass** das Strecken der Folie in Längsrichtung bei einer Temperatur im Bereich von 80 bis 130 °C und die Querstreckung im Bereich von 90 bis 150 °C durchgeführt wird und dass das Längsstreckverhältnis im Bereich von 2,5:1 bis 6:1 liegt, bevorzugt von 3:1 bis 5,5:1, und das Querstreckverhältnis im Bereich von 3,0:1 bis 5,0:1, bevorzugt von 3,5:1 bis 4,5:1.

14. Verfahren nach Anspruch 13, **dadurch gekennzeichnet, dass** die gestreckte Folie zur Thermofixierung über eine Zeitdauer von etwa 0,1 bis 10 s bei einer Temperatur von 150 bis 250 °C gehalten wird.

15. Verfahren nach Anspruch 13 oder 14, **dadurch gekennzeichnet, dass** Verschnittmaterial, das bei der Folienherstellung anfällt, als Regenerat in einer Menge von bis zu 60 Gew.-%, bevorzugt 10 bis 50 Gew.-%, jeweils bezogen auf das Gesamtgewicht der Folie, wieder für die Folienherstellung verwendet wird.

16. Verwendung der Folie nach einem oder mehreren der Ansprüche 1 bis 13 zum Verpacken von Nahrungs- und Genußmitteln.